Europäisches Patentamt

European Patent Office

Office européen des brevets

(11) Publication number: **0 313 742**
**A2**

# EUROPEAN PATENT APPLICATION

(21) Application number: 88113034.8

(22) Date of filing: 11.08.88

(51) Int. Cl.⁴: **F16H 3/08** , **F16H 5/08**

(30) Priority: 27.10.87 US 114230

(43) Date of publication of application:
03.05.89 Bulletin 89/18

(84) Designated Contracting States:
DE FR GB IT

(71) Applicant: TECUMSEH PRODUCTS COMPANY
100 East Patterson Street
Tecumseh Michigan 49286(US)

(72) Inventor: Jolliff, Norman E.
9500 Tipton Highway
Tipton Michigan(US)

(74) Representative: Weitzel, Wolfgang, Dr.-Ing.
St. Pöltener Strasse 43
D-7920 Heidenheim(DE)

(54) Shift mechanism for an in-line-shift transmission.

(57) A shift mechanism for an in-line-shift transmission includes a shaft (14) and a shift key (28) coupled to the shaft for rotation therewith while remaining axially displaceable relative the shaft. The shift key includes an outwardly biased lug (42). A gear (24) defines an axial bore having a cylindrical wall journalled on the shaft for rotation relative the shaft. The gear further defines a recess (50) configured to receive and engage the lug to couple the gear to the shaft for rotation therewith. A cam (88) is disposed circumjacent the shaft and axially adjacent the gear to engage and guide the biased lug outwardly when the shift key is displaced axially toward the gear, with a substantial portion of the lug being disposed outwardly of the cylindrical wall upon receipt and engagement of the lug by the recess.

FIG. 1

EP 0 313 742 A2

# SHIFT MECHANISM FOR AN IN-LINE-SHIFT TRANSMISSION

The present invention relates generally to gear transmissions and more particularly to a gear shift mechanism for an in-line-shift transmission.

In a typical in-line-shift transmission, a plurality of gears are journalled adjacent one another on a common shaft with the various gears providing for different gear ratios and/or a reversal of direction depending upon which one of the plurality of gears is selectively coupled to the shaft. In one known type of shifting arrangement for this type of transmission, a key is slid axially in a groove in the shaft on which the gears are journalled to couple the gears one at a time to the shaft. The key is provided with a lug which is biased in a radially outward direction. Each of the gears is provided with a corresponding recess into which the lug of the shift key is received upon axial displacement of the lug into alignment with the selected gear. An integral shoulder or a separate washer disposed intermediate adjacent gears separates the recesses of each gear so that the lug of the key can engage only one gear at a time. The gear shoulder or intermediate washer in cooperation with chamfered faces on the lug of the key provide a camming action as the key is slid axially which disengages the lug from the recess of each gear prior to engagement of the lug with the recess of the next gear.

In the prior art, there is often provided a spacer in the neutral position between forward and reverse gears. As the lug passes over the spacer toward engagement with a gear, the lug is displaced in a radially outward direction such that the radially outermost portion of the key lug is the first part of the lug to engage the recess of the gear as the key springs outwardly. As a result the recess of the selected gear initially engages only the outermost portion of the key lug which can result in breakage of the tip of the key lug due to shear forces.

Another disadvantage of the prior art is that the initial engagement of the recess of the gear with the tip of the key lug results in a twisting of the key, since the tip of the key lug is offset radially from the shank of the key. A moment is applied about the longitudinal axis of the key which can result in permanent deformation or breakage of the key.

It would be advantageous to provide a shift mechanism in which a substantial portion of the lug of the shift key is disposed radially outwardly of the radially inwardmost extent of the recess of the gear upon axial displacement of the lug into engagement with the recess. Such a mechanism would avoid the problems associated with the prior art in which the initial engagement of the recess with the lug occurs at the radially outermost tip of the lug.

One aspect of the present invention involves a cam disposed adjacent a gear. The cam is followed by the lug of the shift key, as the shift key is displaced axially. Movement of the lug toward the gear results in outward displacement of a substantial portion of the lug beyond the inwardmost extent of the recess of the gear prior to the lug entering into engagement with the recess. Movement of the lug away from the gear results in inward displacement of the lug, with a substantial portion of the lug remaining radially outwardly of the inwardmost extent of the gear recess as the lug disengages the gear.

The present invention is an improvement over the prior art in one aspect because the shift key lug enters into and exits from engagement with the recess of the gear primarily axially, as opposed to radially. Some consequent advantages over the prior art are that a more massive portion of the key lug and a more radially inward portion of the key lug are presented to the recess at initial engagement, thereby reducing the likelihood of damage to the key.

The present invention, in accordance with one aspect thereof, provides a shift mechanism in an in-line-shift transmission. The mechanism includes a shaft, a shift key having a lug, and means for coupling the shift key to the shaft for rotation therewith while permitting axial displacement of the shift key relative to the shaft. Also included is a means for biasing the lug radially outwardly relative to the shaft, and a gear defining an axial bore having a wall journalled on the shaft for rotation relative to the shaft. The gear defines a recess configured to receive and engage the lug to couple the gear to the shaft for rotation therewith. Means for displacing the shift key axially relative to the gear is also provided. A cam means is disposed circumjacent the shaft and axially adjacent the gear for engaging and guiding the lug outwardly in cooperation with the lug biasing means when the shift key is displaced axially toward the gear. As a result, a substantial portion of the lug is disposed outwardly of the wall journalled on the shaft prior to receipt and engagement of the lug by the recess.

One object of the present invention is to provide an improved shift mechanism for an in-line-shift transmission.

Further objects and advantages of the present invention will become apparent from the following description, drawings and claims.

Fig. 1 is an elevational, partially sectional view of a gear shift mechanism in an in-line-shift transmission coupled to a differential transaxle, constructed in accordance with the present invention.

Figs. 2-6 show in sequence the axial and radial displacement of the lugs of the shift keys of the present invention vis-a-vis the recesses of the gears and the annular spacer cam disposed intermediate adjacent gears, thus illustrating the process of disengagement of the shift key lug from the forward (right) gear through engagement of the shift key with the adjacent reverse (left) gear.

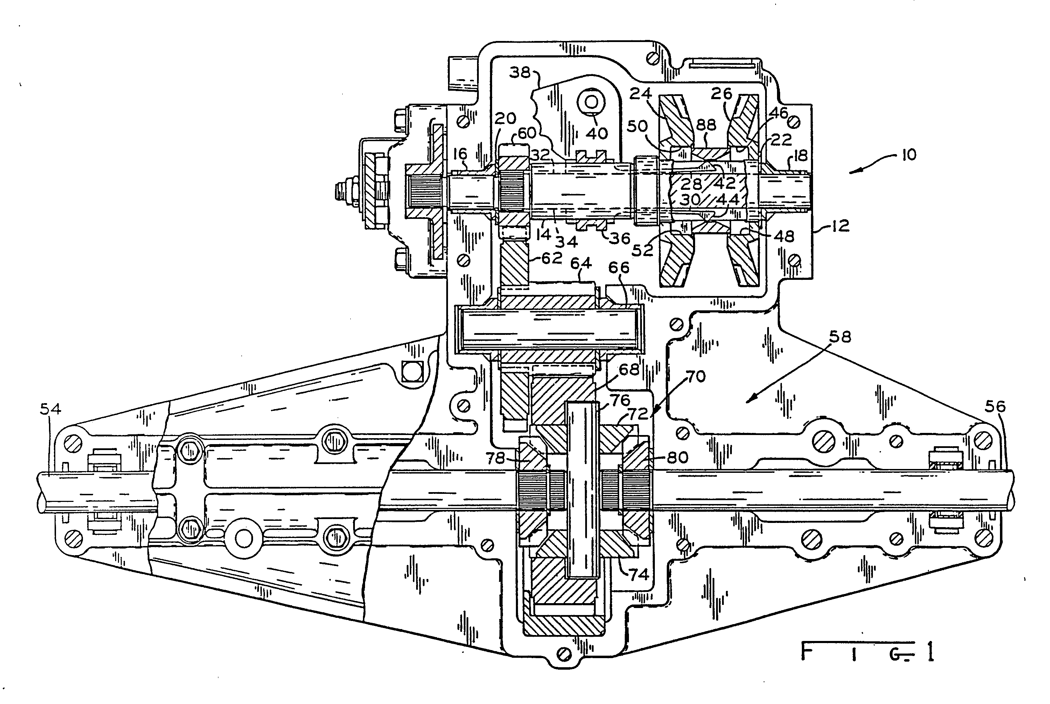

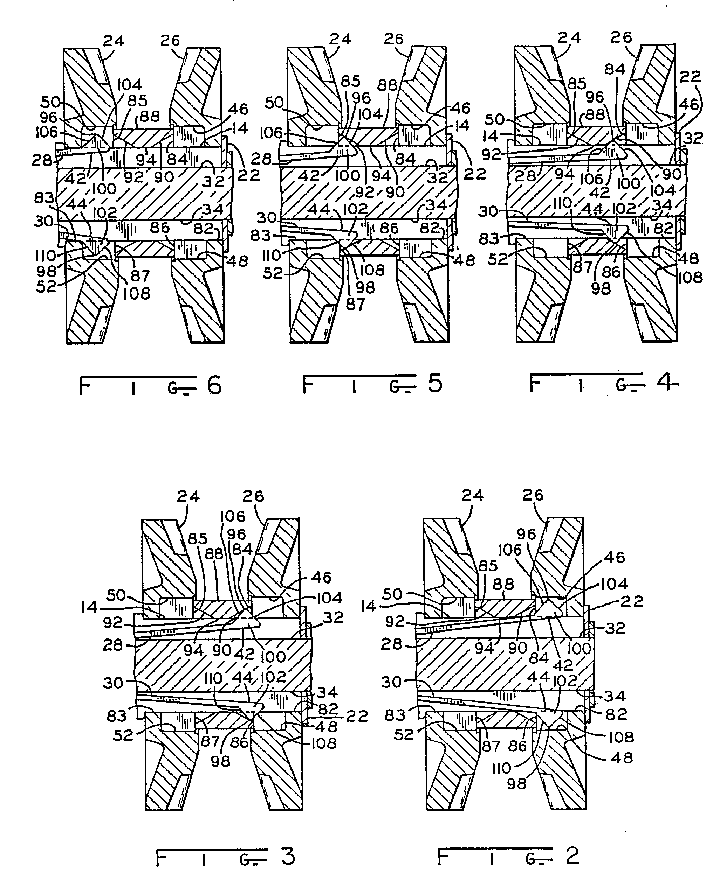

Fig. 2 is an elevational, sectional view of a portion of the shift mechanism of Fig. 1, showing in particular the shift key lug of the shift mechanism fully engaged with the recess of the forward gear.

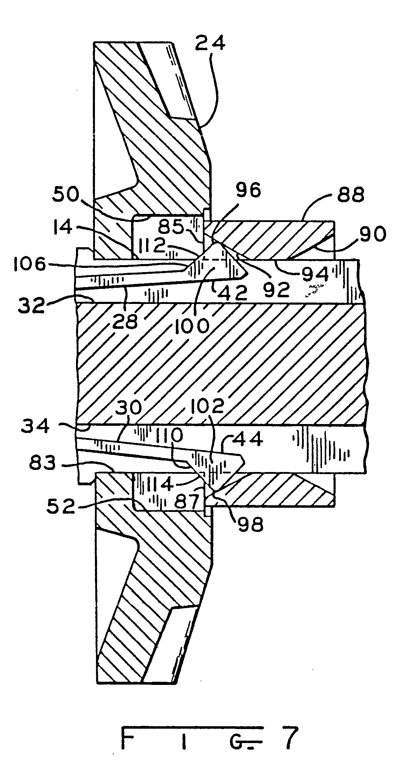

Fig. 3 is an elevational, sectional view of a portion of the shift mechanism of Fig. 1, showing in particular the shift key lug in partial engagement with the recess of the forward gear.

Fig. 4 is an elevational, sectional view of a portion of the shift mechanism of Fig. 1, showing in particular the shift key lug fully disengaged from the forward gear, yet not engaged with the reverse gear, thereby constituting a neutral shift position.

Fig. 5 is an elevational, sectional view of a portion of the shift mechanism of Fig. 1, showing in particular the shift key in partial engagement with the recess of the reverse gear.

Fig. 6 is an elevational, sectional view of a portion of the shift mechanism of Fig. 1, showing in particular the shift key fully engaged with the recess of the reverse gear.

Fig. 7 is an enlarged view of a portion of Fig. 5, showing in particular the detail of engagement between the shift key lugs and the recess of the reverse gear.

Referring in particular to Fig. 1, there is illustrated a gear shift mechanism 10 in accordance with the present invention in combination with a differential transaxle. Within housing 12 is a shaft 14 supported by and journalled within housing 12 by bearing bushings 16 and 18 and thrust washers 20 and 22. A pair of beveled gears 24 and 26 are journalled on shaft 14. Beveled gears 24 and 26 are commonly driven by a beveled gear (not shown) disposed perpendicular to the axis of gears 24 and 26 and engaging both gears simultaneously. Hence, gears 24 and 26 rotate in opposite directions with gear 24 being the reverse gear and gear 26 being the forward gear. Gears 24 and 26 are generally free to rotate on shaft 14, but one or the other can alternately be coupled to shaft 14 by a pair of resilient shift keys 28 and 30 disposed in diametrically opposed slots 32 and 34 in shaft 14.

Slots 32 and 34 extend radially inwardly from the outer cylindrical surface of shaft 14 and extend axially of shaft 14. Shift keys 28 and 30 can be slid axially of shaft 14 by means of shift collar 36 which is engaged by a projection (not shown) on shift plate 38. A shift lever (not shown) engages flatted shaft 40 to rotate shift plate 38 about the axis of shaft 40, thereby resulting in axial displacement of shift keys 28 and 30. U.S. Patent No. Re. 32,125, which is hereby incorporated by reference, shows further details of this shifting mechanism.

The transmission is shifted into forward drive by sliding keys 28 and 30 to the right so that lugs 42 and 44 spring outwardly and engage recesses 46 and 48 in gear 26. The transmission is shifted into reverse drive by sliding keys 28 and 30 to the left so that lugs 42 and 44 engage recesses 50 and 52 in gear 24. The structure and operation of lugs 42 and 44 relative to recesses 46-52 is discussed more fully below in connection with Figs. 2-7.

Shaft 14 is connected to output shafts 54 and 56 of differential transaxle 58 through a plurality of intermediate gears including spur gear 60 driven by shaft 14, and gears 62 and 64 splined together and supported for rotation by shaft 66. Gear 64 drives carrier gear 68 of differential 70. Differential 70 is of conventional design and includes a pair of beveled gears 72 and 74 journalled on shaft 76, with shaft 76 being journalled within carrier gear 68. Beveled gears 72 and 74 engage output beveled gears 78 and 80 which drive output shafts 54 and 56, respectively.

Referring in particular to Figs. 2-7, the operation of a portion of the shift mechanism of the present invention is shown in greater detail. Fig. 7 is an enlarged view of a portion of Fig. 5.

In Fig. 2, lugs 42 and 44 of shift keys 28 and 30 are shown fully engaged with recesses 46 and 48, respectively, of forward gear 26. In this orientation, shift keys 28 and 30 couple forward gear 26 to shaft 14 for rotation therewith. It should be noted that forward gear 26 defines an axial bore therethrough having a cylindrical wall 82 which is journalled on shaft 14. This arrangement permits rotation of gear 26 relative shaft 14 when gear 26 is not coupled to shaft 14 by shift keys 28 and 30. It should also be noted that recesses 46 and 48 of gear 26 extend radially outwardly from cylindrical wall 82 and communicate with the axial bore of gear 26. Furthermore, recesses 46 and 48 have axially open ends 84 and 86.

Disposed circumjacent shaft 14 and intermediate forward gear 26 and reverse gear 24 is annular spacer 88 which includes opposed conical cam surfaces 90 and 92 which diverge radially outwardly and extend radially outwardly of the radially inwardmost extent of the recesses 46-52 which terminate at cylindrical walls 82 and 85. Between conical cam surfaces 90 and 92 is a cylindrical cam surface 94 adjacent shaft 14. Each conical cam surface 90 and 92 diverges radially from shaft 14 linearly relative to the axis of shaft 14, in an axial direction toward the respective gear which the cam surface faces.

Shift keys 28 and 30 bias lugs 42 and 44 radially outwardly relative to the shaft by means of the spring nature of shift keys 28 and 30 which are constructed with an outwardly extending bend. Lugs 42 and 44 each have a cam follower surface which is substantially the radially outermost portion of each lug, as indicated by reference numerals 96 and 98. Cam follower surfaces 96 and 98 engage and are guided by cam surfaces 90, 94 and 92 as shift keys 28 and 30 are displaced axially. Lugs 42 and 44 also include recess engaging surfaces 100 and 102 which extend from the cam follower surfaces 96 and 98, respectively, in axial directions toward each of the forward and reverse gears 26 and 24. The recess engaging surfaces 100 and 102 are bounded in the axial direction by planar end surfaces 104 and 106, and 108 and 110, respectively. Each of the planar surfaces 104-110 extends from the corresponding cam follower surface, with end surfaces 104 and 108 being inclined radially inwardly and toward forward gear 26 and end surfaces 106 and 110 being inclined radially inwardly and toward reverse gear 24.

Referring to Figs. 2, 3, 4, 5 and 6 in sequence, the radial and axial displacement of lugs 42 and 44 relative to recesses 46-52 is described briefly. In Fig. 2, lugs 42 and 44 are fully engaged with recesses 46 and 48, and forward gear 26 is coupled to shaft 14. In Fig. 3, lugs 42 and 44 have engaged and have followed cam surface 90 of cam 88 as shift keys 28 and 30 have been displaced axially away from forward gear 26 and toward reverse gear 24. Lugs 42 and 44 are still in engagement with forward gear 26, although a substantial portion of lugs 42 and 44, including the cam follower surfaces 96 and 98 are disposed outwardly of the cylindrical wall 82 of gear 26. In Fig. 4, lugs 42 and 44 are shown fully disengaged from recesses 46 and 48. In this orientation, forward gear 26 is no longer coupled to shaft 14 and may free wheel thereupon. In Fig. 5, lugs 42 and 44 have passed over cam surface 94 and have engaged and have followed cam surface 92 of cam 88 as shift keys 28 and 30 have been displaced further away from forward gear 26 and toward reverse gear 24. Lugs 42 and 44 have engaged recesses 50 and 52, respectively, of reverse gear 24, with a substantial portion of lugs 42 and 44, including the cam follower surfaces 96 and 98, having already been disposed outwardly of the cylindrical wall 83 of gear 24 prior to such engagement. Reverse gear 24 is thereby coupled to shaft 14 for rotation therewith. In Fig. 6, lugs 42 and 44 are fully engaged with recesses 50 and 52, respectively, of reverse gear 24.

With reference to Fig. 7, the initial engagement of the shift key lugs with the recesses of a gear is described more fully. By way of example, the initial engagement of key lugs 42 and 44 with recesses 50 and 52 of reverse gear 24 is referred to in particular. As shift keys 28 and 30 are moved to the left, lugs 42 and 44, which are biased radially outwardly, follow cam surface 92 of spacer 88 and are displaced radially outwardly. More particularly, it is the cam follower surfaces 96 and 98 of lugs 42 and 44, respectively, which engage and follow cam surface 92. Cam follower surfaces 96 and 98 are the radially outermost tips of lugs 42 and 44. As lug tips 96 and 98 follow cam surface 92, they come to be disposed radially outwardly of the radially inwardmost portion of recesses 50 and 52, i.e., outwardly of cylindrical wall 83, prior to engagement of any portion of lugs 42 and 44 with recesses 50 and 52.

In the orientation of Fig. 7, the first engagement of the recess engaging surfaces 100 and 102 of lugs 42 and 44 with recesses 50 and 52 occurs at the intersection of planar end surfaces 106 and 110 with recess open ends 85 and 87, respectively, at points 112 and 114. As keys 28 and 30 are moved further axially into recesses 50 and 52, driving engagement between shaft 14 and gear 24 will have been effected prior to the lug tips 96 and 98 engaging recesses 50 and 52 at open ends 85 and 87. Hence the first engagement between the key lug and recess occurs at a point radially inwardly of the radially outermost tip of the key lug where the lug is stronger due to a greater mass of material being present at points 112 and 114 than at tips 96 and 98.

It should be appreciated that cam surfaces 90 and 92 of annular spacer 88 not only serve to guide lugs 42 and 44 radially outwardly prior to engagement with the recesses of the gears but also cooperate with the radially outward bias of lugs 42 and 44 to actively urge the lugs into engagement with the gear recesses. Furthermore, the cam surfaces 90 and 92 reduce shifting effort by facilitating the inward radial displacement of lugs 42 and 44. Also to be appreciated is the function of cylindrical cam surface 94 which provides a neutral shift position in which the lugs are not subject to being urged into engagement with either gear.

It will be appreciated that the foregoing description of a preferred embodiment of the invention is presented by way of illustration only, and not by way of any limitation, and that various alternatives and modifications may be made to the illustrated embodiment without departing from the spirit and scope of the invention.

## Claims

1. A shift mechanism in an in-line-shift transmission comprising a shaft (14); a shift key (28) having a lug (42); means (32) for coupling said shift key to said shaft for rotation therewith while permitting axial displacement of said shift key relative to said shaft; means for biasing the lug radially outwardly relative to said shaft; a gear (24) defining an axial bore having a wall journalled on said shaft for rotation relative to said shaft, said gear further defining a recess (50) configured to receive and engage the lug to couple said gear to said shaft for rotation therewith; and means (36) for displacing said shift key axially relative to said gear; characterized by: cam means (88), disposed circumjacent said shaft and axially adjacent said gear, for engaging and guiding the lug outwardly in cooperation with said lug biasing means when said shift key is displaced axially toward said gear, such that a substantial portion of the lug is disposed outwardly of the wall journalled on said shaft upon receipt and engagement of the lug by the recess.

2. The shift mechanism of claim 1, characterized in that said cam means (88) includes a cam surface (92,90) facing said shaft and diverging radially therefrom in an axial direction toward said gear (24).

3. The shift mechanism of claim 2, characterized in that the cam surface (92,90) extends outwardly of the wall journalled on said shaft.

4. The shift mechanism of claim 3, characterized in that the cam surface (92,90) diverges from said shaft (14) linearly relative to the axis of said shaft.

5. The shift mechanism of claim 1, characterized in that the recess (50) of said gear (24) is in communication with the axial bore thereof and extends outwardly of the wall journalled on said shaft.

6. The shift mechanism of claim 5, characterized in that the recess (50) has an axially open end facing said cam means (92).

7. The shift mechanism of claim 1, characterized in that the lug (42) of said shift key (28) has a cam follower surface (104) for engagement with said cam means (92), the lug further having a recess engaging surface (100) which extends from the cam follower surface in an axial direction toward said gear.

8. The shift mechanism of claim 7, characterized in that the recess engaging surface (100) is bounded by a planar end surface (104,106) inclined radially inwardly in an axial direction toward said gear, the planar end surface extending from the cam follower surface.

9. A shift mechanism in an in-line-shift transmission comprising a shaft (14); a shift key (28) having a lug (42); means (32) for coupling said shift key to said shaft for rotation therewith while permitting axial displacement of said shift key relative to said shaft; means for biasing the lug radially outwardly relative to said shaft; a plurality of gears (24,26) adjacent one another, each defining an axial bore having a wall journalled on said shaft for rotation relative to said shaft, each defining a recess (50,46) configured to receive and engage the lug to couple the gear to said shaft for rotation therewith; means (36) for displacing said shift key axially relative to said plurality of gears; and cam means (88), disposed circumjacent said shaft and axially adjacent and intermediate adjacently journalled gears, for engaging and guiding the lug outwardly in cooperation with said lug biasing means when said shift key is displaced axially toward a gear, such that a substantial portion of the key lug is disposed outwardly of said wall upon receipt and engagement of the lug by one of the recesses (Fig. 3).

10. The shift mechanism of claim 9, characterized in that said cam means includes opposed cam surfaces (90,92), each facing a different one of the gears (26,24) adjacent said cam means, each cam surface facing said shaft and diverging radially therefrom in an axial direction toward the respective gear which the cam surface faces.

FIG. 1

FIG 6

FIG 5

FIG 4

FIG 3

FIG 2

FIG 7